## Europäisches Patentamt
## European Patent Office
## Office européen des brevets

(11) Veröffentlichungsnummer: **0 059 237**
**B1**

(12)

# EUROPÄISCHE PATENTSCHRIFT

(45) Veröffentlichungstag der Patentschrift:
02.04.86

(51) Int. Cl.⁴: **G 06 F 13/14**

(21) Anmeldenummer: 81108373.2

(22) Anmeldetag: 15.10.81

(54) Verfahren und Schaltungsanordnung zur Steuerung des Datentransports zwischen einzelnen Funktionseinheiten einer Datenverarbeitungsanlage.

(30) Priorität: 02.03.81 DE 3107871

(43) Veröffentlichungstag der Anmeldung:
08.09.82 Patentblatt 82/36

(45) Bekanntmachung des Hinweises auf die Patenterteilung:
02.04.86 Patentblatt 86/14

(84) Benannte Vertragsstaaten:
AT BE CH FR GB IT LI NL SE

(56) Entgegenhaltungen:
US - A - 3 573 856
US - A - 4 038 644

ELECTRONIC DESIGN, 11, 24. Mai 1979, Seiten 128-133, Rochelle Park, USA S.J. DURHAM: "Fast LSI arbiters supervise priorities for bus-access in multiprocessor systems"
NACHRICHTENTECHNIK ELEKTRONIK, Band 30, Nr. 6, 1980, Seiten 224-228, Berlin, DE. W. WINTER: "Kopplung von Mikrorechnern über ein gemeinsames, zeitgeteilt benutztes Bussystem".

(73) Patentinhaber: **COMPUTER GESELLSCHAFT KONSTANZ MBH, Max-Stromeyer-Strasse 116, D-7750 Konstanz (DE)**

(72) Erfinder: **Voigt, Heinz, Paul-Gerhardt-Weg 9, D-7750 Konstanz (DE)**
Erfinder: **Stodolka, Heinz, Brandesstrasse 10, D-7750 Konstanz (DE)**

(74) Vertreter: **Mehl, Ernst, Dipl.-Ing. et al, Postfach 22 01 76, D-8000 München 22 (DE)**

## Beschreibung

Die Erfindung bezieht sich auf ein Verfahren zur Steuerung des Datentransports zwischen einzelnen Funktionseinheiten einer Datenverarbeitungsanlage gemäss dem Oberbegriff des Patentanspruchs 1.

Eine der Hauptaufgaben bei der Entwicklung von elektronischen Datenverarbeitungsanlagen besteht bekanntlich darin, immer mehr Daten in immer kürzerer Zeit zu verarbeiten. Neben der Entwicklung schneller Speicher mit entsprechend kurzen Zugriffszeiten kommt es dabei insbesondere auch auf einen schnellen Datentransfer zwischen den einzelnen Komponenten an.

In der Druckschrift «Nachrichtentechnik Elektronik», Bd. 30, Nr. 6, 1980, S. 224 bis 228, ist die Kopplung von Mikrorechnern über ein gemeinsames Bussystem beschrieben, wobei eine Bussteuerung dafür sorgt, dass simultane Belegungen des Globalbusses durch mehrere Rechner vermieden werden. Die Steuerung des Datentransports zwischen einzelnen Mikrorechnern bzw. Funktionseinheiten erfolgt dabei in der Weise, dass die jeweils aktive Funktionseinheit ein Anforderungssignal an den zentralen Busverwalter sendet, der eine Prioritätsprüfung der anfordernden Funktionseinheit und eine sich daran anschliessende Prioritätsvergabe vornimmt, worauf eine in einem Senderegister der anfordernden Funktionseinheit bereitgestellte Steuerinformation auf den Globalbus gegeben und von der jeweils adressierten passiven Funktionseinheit empfangen wird.

Aus der US-A Nr. 4038644 ist ferner ein Datenverarbeitungssystem bekannt, bei dem die einzelnen Funktionseinheiten über je einen lokalen Busadapter an ein Bussystem angekoppelt sind. Bei diesem bekannten System wird der Erfolg oder Misserfolg der Datenübertragung in der Weise festgestellt, dass, sobald die Nachricht am Busadapter der passiven Funktionseinheit angekommen ist, in den Busadaptern der beiden, am Datentransfer beteiligten Funktionseinheiten jeweils ein Prüfzyklus in bezug auf die Vollständigkeit der Nachricht durchgeführt wird. Weiterhin ist vorgesehen, dass im Fehlerfall dieser Datentransport zunächst noch einmal wiederholt wird und, falls dieser Fehler erneut auftritt, die Übertragungsleitung im Busadapter der passiven Funktionseinheit unterbrochen wird. Eine Rückmeldung an die aktive Funktionseinheit ist vorgesehen.

Der vorliegenden Erfindung liegt nun die Aufgabe zugrunde, ein Verfahren gemäss den Merkmalen des Oberbegriffs des Patentanspruchs 1 in der Weise zu verbessern, dass der Datentransport zwischen den verschiedenen Funktionseinheiten der Datenverarbeitungsanlage mit möglichst grosser Geschwindigkeit und Sicherheit durchgeführt werden kann.

Die Lösung dieser Aufgabe ergibt sich erfindungsgemäss aus den kennzeichnenden Merkmalen des Patentanspruchs 1. Der Vorteil dieses Verfahrens besteht vor allem darin, dass die adressierte Funktionseinheit, die mit dem Busverwalter keinen Dialog führt, selbst einen für sie bestimmten Auftrag durch ständiges Abfragen ihres Steuerbusempfängers erkennt und dann — im Gegensatz zur anfordernden Funktionseinheit — ihre Antwort selbst auf den Fehlerreaktionsbus und ggf. auch auf den Datenbus schaltet, so dass die anfordernde Funktionseinheit sofort erkennen kann, ob der Datentransfer je nach Erfolg oder Misserfolg einwandfrei abgelaufen ist oder ggf. wiederholt werden muss.

Um zu verhindern, dass irgendeine Funktionseinheit durch stetiges Aussenden neuer Anforderungssignale andere Funktionseinheiten über einen längeren Zeitraum sperren kann, ist gemäss einer vorteilhaften Ausgestaltung des erfindungsgemässen Verfahrens vorgesehen, dass neue Anforderungssignale einer oder mehrerer, unmittelbar vorher noch aktiver Funktionseinheiten in ihrer Priorität für eine vorgegebene feste Zeit zurückgestuft werden, so dass Anforderungssignale von anderen Funktionseinheiten mit ursprünglich niedrigerer Priorität bevorzugt werden.

Weitere vorteilhafte Ausgestaltungen der Erfindung, insbesondere in Verbindung mit einer Schaltungsanordnung zur Durchführung des erfindungsgemässen Verfahrens, sind in den übrigen Patentansprüchen angegeben.

Im folgenden wird ein Ausführungsbeispiel der Erfindung anhand der Zeichnung näher erläutert. Dabei zeigen:

Fig. 1 den prinzipiellen Aufbau einer Datenverarbeitungsanlage gemäss der Erfindung,

Fig. 2 ein Blockschaltbild für den in der Anordnung gemäss Fig. 1 vorgesehenen Busverwalter, und

Fig. 3 ein Schaltungsbeispiel einer Prioritätsschaltung für zwei rückstufbare Funktionseinheiten.

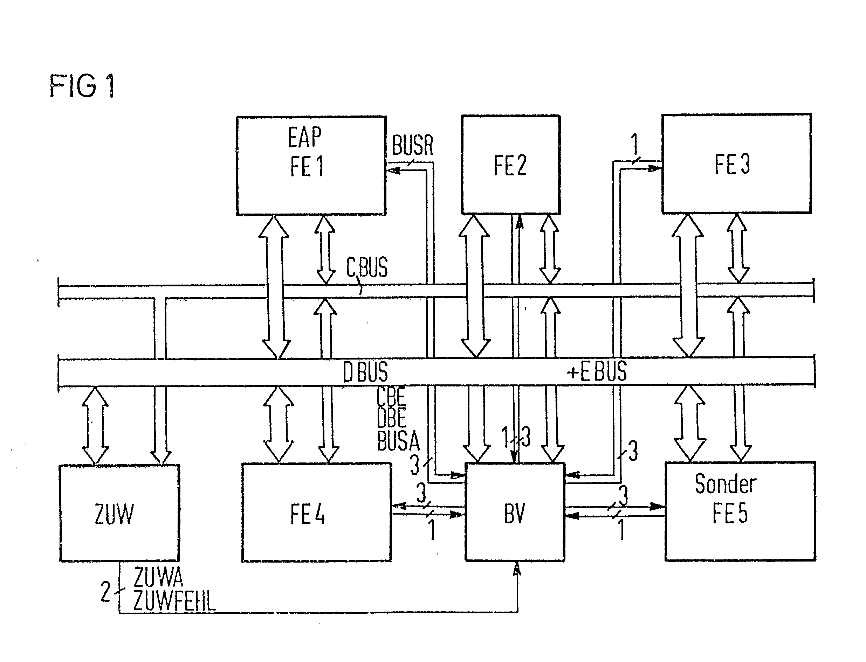

Die Fig. 1 zeigt den prinzipiellen Aufbau einer Datenverarbeitungsanlage, deren einzelne Funktionseinheiten FE 1...5, beispielsweise ein Ein-/Ausgabeprozessor EAP, Kanalwerke, Ansteuerungen für Peripheriegeräte und ein Zubringerwerk ZUW für die Abwicklung des Datenverkehrs zum Speicher, über ein zentrales Bussystem miteinander verknüpft sind. Dieses Bussystem besteht im einzelnen aus einem Datenbus D-BUS mit z.B. 32 bit und 4 Paritätsbits, einem Steuerbus C-BUS mit z.B. 11 bit + 1 Paritätsbit und einem Fehlerreaktionsbus E-BUS mit z.B. 4 bit. Zur Steuerung des Datentransportes zwischen den einzelnen Funktionseinheiten FE 1...5 dient ein sogenannter Busverwalter BV, der über einzelne Steuerleitungen sternförmig mit sämtlichen Funktionseinheiten verbunden ist. Das Zubringerwerk ZUW kann abweichend von den anderen Funktionseinheiten den Steuerbus C-BUS nur empfangen und ist mit dem Busverwalter BV nur über eine Antwortleitung ZUWA und eine Fehlermeldeleitung ZUWFEHL verbunden. Datentransporte zwischen den Funktionseinheiten und dem Zubringerwerk ZUW werden z.B. durch das 00-Bit (ZUW) auf dem Steuerbus C-BUS gekennzeichnet.

Bei einem Datentransport werden auf dem Steuerbus C-BUS stets Steuerdaten von einer aktiven, auftraggebenden Funktionseinheit zu einer passiven, auftragnehmenden Funktionseinheit übertragen. Mit dem Datentransport ist im allgemeinen eine Übertragung von Daten über den Datenbus D-BUS verbunden. Diese Übertragung erfolgt entweder von der auftraggebenden Funktionseinheit zur auftragnehmenden Funktionseinheit (Schreiben) oder umgekehrt (Lesen). Informationen über den Erfolg oder Misserfolg der Datenübertragung werden für jeden Datentransport auf dem Fehlerreaktionsbus E-BUS nur vom Auftragnehmer transportiert. Die Übertragungsrichtung auf dem Datenbus D-BUS wird z.B. durch das 01-Bit auf dem Steuerbus C-BUS bestimmt, das als Richtungsbit bezeichnet wird und z.B. bei einem Lesebefehl mit einer 1 und bei einem Schreibbefehl mit einer 0 markiert wird. Um einen Datentransport anzufordern, meldet sich der Auftraggeber zunächst mit einem Anforderungssignal beim Busverwalter BV. Der Busverwalter schaltet nun die Steuerbusinformation, die insbesondere die Adresse für die anfordernde Funktionseinheit enthält, und im Falle eines Schreibbefehls auch die Datenbusinformation des Auftraggebers auf den Steuer- bzw. Datenbus. Zum Abschluss des Datentransports schickt der Busverwalter ein Busantwortsignal an den Auftraggeber. Der Auftragnehmer erkennt aus der Codierung der Steuerbusinformation, dass er adressiert wurde, übernimmt bei Schreiben die Information des Datenbusses bzw. sendet bei Lesen die Datenbusinformation und meldet den Erfolg bzw. Misserfolg über den Fehlerreaktionsbus zur auftraggebenden Funktionseinheit. Jeder Datentransport benötigt einen Buszyklus, der z.B für Schreiben zwei Takte und für Lesen drei Takte erfordert. Beim Datentransport mit Sonderfunktionseinheiten dauert das Lesen z.B. vier Takte. Beim Datentransport mit dem Zubringerwerk wird die Ausführungszeit durch das Zubringerwerk bestimmt, dauert mindestens drei Takte und wird mit dem Antwortsignal ZUWA dem Busverwalter BV gemeldet. Der Buszyklus wird stets von der auftraggebenden Funktionseinheit beim Busverwalter BV angefordert. Die Buszuteilung erfolgt – ohne Meldung – durch direktes Einschalten der benötigten Bussender des Auftraggebers durch den Busverwalter. Eine Meldung des Busverwalters an die auftraggebende Funktionseinheit erfolgt lediglich abschliessend, um die Wegnahme des Anforderungssignals zu veranlassen. Die auftragnehmende Funktionseinheit führt keinen Dialog mit dem Busverwalter. Sie erkennt einen für sie bestimmten Auftrag durch ständiges Abfragen ihres Steuerbusempfängers und schaltet dann – im Gegensatz zum Auftraggeber – ihre Antwort selbst auf den Fehlerreaktionsbus E-BUS und ggf. auch auf den Datenbus D-BUS.

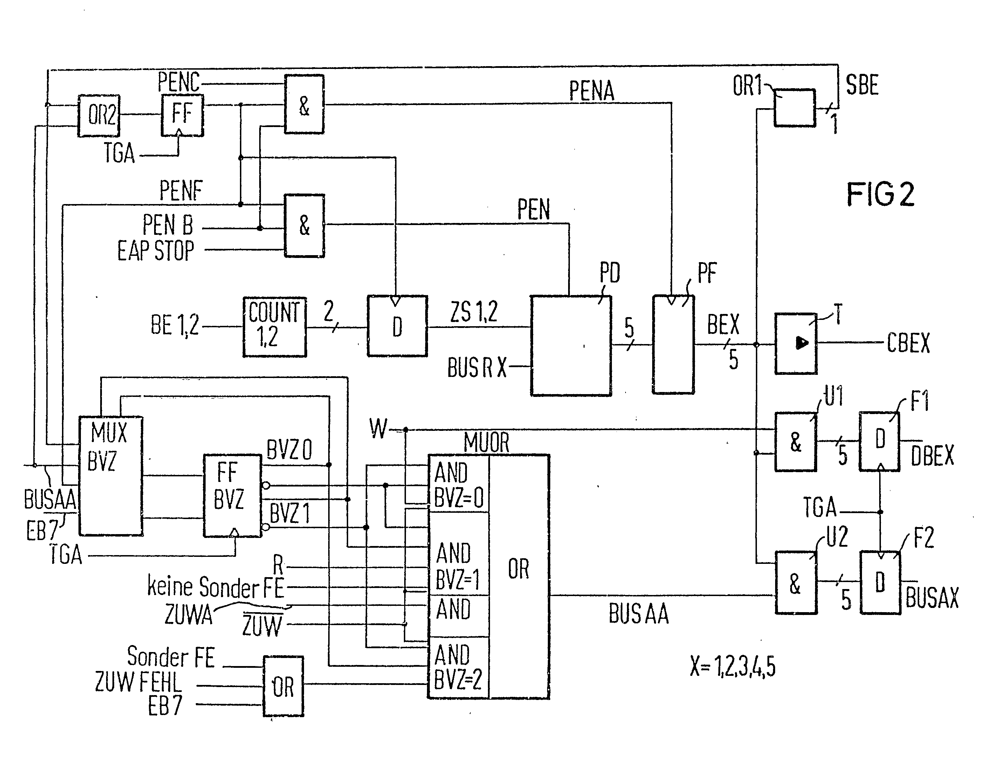

Der schaltungstechnische Aufbau und die Funktionsweise des Busverwalters werden im folgenden anhand des in der Fig. 2 dargestellten Blockschaltbildes näher erläutert. Unter der Voraussetzung, dass der Busverwalter BV über ein Prioritätsfreigabesignal PENF freigegeben wird, werden die von verschiedenen Funktionseinheiten ankommenden Anforderungssignale BUSR X

mit X = 1...5 für die Funktionseinheiten FE 1...5 entsprechend ihrer in der Prioritätsdecodierstufe PD festlegbaren Priorität mit dem Prioritätssignal PEN decodiert und mit einem Signal PENA in ein Prioritätsflipflop PF eingetaktet. Der Ausgang des Prioritätsflipflops PF erzeugt jeweils ein dem jeweiligen Anforderungssignal BUSR 1...5 und damit ein der jeweiligen Funktionseinheit 1...5 zugeordnetes Busfreigabesignal BE X 1...5.Aus je einem dieser Signale BE 1...5 wird über eine logische Verknüpfung, z.B. über einen Teiber T, ein Steuerbus-Freigabesignal CBE X für die jeweils anfordernde Funktionseinheit erzeugt. Aufgrund dieses Steuerbus-Freigabesignals CBE X sendet nun die ausgewählte Funktionseinheit ihre codierte Steuerinformation auf den Steuerbus C-BUS. Das in der Steuerinformation enthaltene Richtungsbit C-BUS 01 wird entsprechend der Befehlsart – Schreiben oder Lesen – dahingehend ausgewertet, dass ein am invertierten Ausgang eines UND-Gliedes U1 anliegendes Richtungsbit C-BUS 01 = 0 (Schreibsignal W) über ein D-Flipflop F1 ein Datenbus-Freigabesignal DBE X erzeugt.

Das Vorhandensein eines Steuerbus-Freigabesignals CBE wird über das aus dem Busfreigabesignal BE 1...5 über eine ODER-Schaltung OR1 erzeugte Sammelsignal SBE erkannt. Über dieses Sammelsignal SBE wird unter anderem ein Busverwaltungszähler BVZ angesteuert, der aus einer Multiplexerschaltung MUX BVZ und zwei Flipflops FF BVZ besteht. Die Zählerstände BVZ 0, BVZ 1 werden unter Einbeziehung weiterer Meldungen über eine Mehfach-UND/ODER-Verknüpfung MUOR zur Erzeugung des Busantwort-Anforderungssignals BUSAA ausgewertet. Wenn ein Datentransport mit dem Busantwort-Anforderungssignal BUSAA beendet wurde, wird der Busverwaltungszähler aus jeder Zählerstellung in die Stellung BVZ = 3 (BVZ 0 = 0, BVZ 1 = 1) gebracht und bleibt dort bis zur Bearbeitung eines neuen Datentransportes. Wenn die Bearbeitung eines Datentransportes vom Busverwalter begonnen wird, d.h. ein Busanforderungssignal BUSR ausgewählt und weiter ein Busfreigabesignal BEX und daraus ein Sammelsignal SBE erzeugt wird, dann wird der Busverwaltungszähler in die Stellung BVZ = 0 (BVZ 0 = 0, BVZ 1 = 0) gebracht und über das Sammelsignal SBE das Prioritätsfreigabesignal PENF unterdrückt, so dass, solange ein Buszyklus abläuft, kein neues Busanforderungssignal BUSR angenommen wird.

Wenn das Zubringerwerk nicht adressiert ist (ZUW ist nicht gültig), wird:

a) bei Schreiben (Schreibsignal W) der Busverwaltungszähler in der Stellung BVZ = 0 ausgewertet und über das Busantwort-Anforderungssignal BUSAA zwei Takte nach Akzeptieren des Busanforderungssignals BUSR X durch Verknüpfung mit dem jeweils zugehörigen Busfreigabesignal BE X über ein UND-Glied U2 und ein D-Flipflop F2 das Busantwortsignal BUSA X erzeugt;

b) bei Lesen (Lesesignal R), sofern keine Sonderfunktionseinheit angesprochen ist, der Busverwaltungszähler in der Stellung BVZ = 1 (BVZ 0 = 0, BVZ 1 = 1) ausgewertet und über das Busantwort-Anforderungssignal BUSAA drei Takte nach Akzeptieren des Busanforderungssignals BUSR das Busantwortsignal BUSA erzeugt;

c) bei Lesen (Lesesignal R), sofern eine Sonderfunktionseinheit angesprochen ist, der Busverwaltungszähler in der Stellung BVZ = 2 (BVZ 0 = 1, BVZ 1 = 0) ausgewertet und über das Busantwort-Anforderungssignal BUSAA vier Takte nach Akzeptieren des Busanforderungssignals BUSR das Busantwortsignal BUSA erzeugt.

Wenn das Zubringerwerk adressiert ist (ZUW ist gültig), wird das Zubringerwerk-Antwortsignal ZUWA abgewartet und daraus über das Busantwort-Anforderungssignal BUSAA das Busantwortsignal BUSA für die auftraggebende Funktionseinheit erzeugt. Bei Fehlermeldung ZUWFEHL des Zubringerwerks ZUW wird bei der Stellung BVZ = 2 des Busverwaltungszählers der Buszyklus nach vier Takten mit dem Busantwortsignal BUSA beendet. Wenn das Zubringerwerk ZUW nicht reagiert, d.h., wenn es keine Fehlermeldung ZUWFEHL und kein Antwortsignal ZUWA erzeugt, wird über eine Zeitüberwachungsschaltung nach ca. 15 ms der E-BUS mit dem Code 7 belegt (EB7). Der Busverwaltungszähler BVZ wird aus der inzwischen eingenommenen Ruhestellung BVZ = 3 in die Stellung BVZ = 0 gebracht, läuft dann bis BVZ = 2 und beendet den Buszyklus.

Eine Stop-Meldung EAP-STOP des Ein/Ausgabeprozessors EAP wird nur dann von aussen wirksam, wenn keine Buszyklen mehr ablaufen, d.h., wenn das Prioritätsfreigabesignal PENF gültig ist. Das Prioritätssignal PEN wird nur erzeugt, wenn das Prioritätsfreigabesignal PENF vorliegt, der Ein-/Ausgabeprozessor nicht gestoppt ist und ausserdem ein zeitvermassendes Taktsignal PENB vorhanden ist. Das Taktsignal PENA wird ebenfalls nur erzeugt, wenn das Prioritätsfreigabesignal PENF gesetzt ist und zwei zeitvermassende Takte PENB und PENC vorhanden sind.

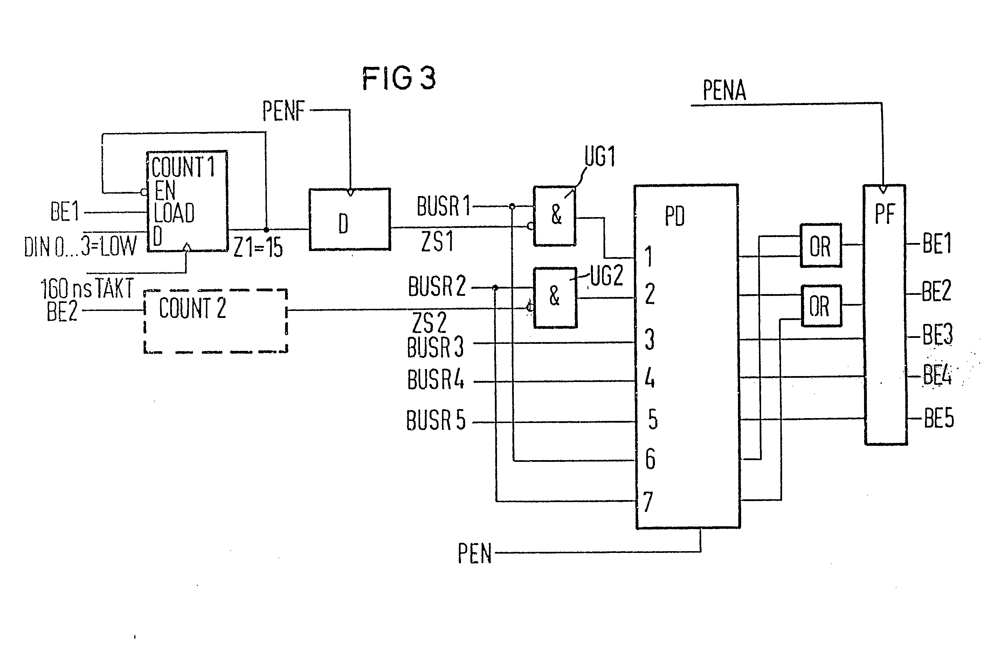

Anhand der Fig. 3 wird die Wirkungsweise der Prioritätsrückstufung am Beispiel der Funktionseinheit FE 1 erläutert. Mit dem Busfreigabesignal BE 1 (LOAD) wird ein Zähler COUNT-1 über die Dateneingänge DIN 0...3 mit LOW vorbesetzt. Der Zählerausgang Z1 = 15 wird dadurch LOW und gibt das Zählerfreigabesignal EN frei. Letzteres wird mit dem Prioritätsfreigabesignal PENF in das D-Flipflop F3 übernommen, erzeugt an dessen Ausgang ZS1 = LOW und sperrt das UND-Glied U3 für das Busanforderungssignal BUSR 1 für die Prioritätsstufe 1. Das Busanforderungssignal BUSR 1 erhält dadurch die Prioritätsstufe 6. Der Zähler COUNT-1 wird mit dem 160-ns-Takt bis zur Stellung 15 weitergezählt und bewirkt, dass nach 2,4 μs der Ausgang Z1 = 15 nach HIGH geht. Über das Zählerfreigabesignal EN wird der Zähler COUNT-1 gesperrt. Ausserdem wird mit dem Prioritätsfreigabesignal PENF das HIGH-Signal in das D-Flipflop F3 übernommen, erzeugt an dessen Ausgang ZS1 = HIGH und gibt damit das UND-Glied U3 für das Busanforderungssignal BUSR 1 für die Prioritätsstufe 1 frei.

## Patentansprüche

1. Verfahren zur Steuerung des Datentransports zwischen einzelnen Funktionseinheiten einer Datenverabeitungsanlage, unter Verwendung eines allen Funktionseinheiten gemeinsamen, aus Datenbus und Steuerbus bestehenden zentralen Bussystems, bei dem die jeweils auftraggebende, einen Datentransport mit einer anderen, auftragnehmenden Funktionseinheit der Datenverarbeitungsanlage durchführende Funktionseinheit ein Anforderungssignal an einen zentralen Busverwalter (BV) sendet, der eine Prioritätsprüfung der auftraggebenden Funktionseinheit und eine sich daran anschliessende Prioritätsvergabe vornimmt, worauf eine in einem Senderegister der auftraggebenden Funktionseinheit bereitgestellte Steuerinformation über den Steuerbus geleitet und von der jeweils auftragnehmenden Funktionseinheit empfangen wird, dadurch gekennzeichnet, dass die Übertragungsrichtung der Daten auf dem Datenbus (DBUS) durch eine entsprechende Codierung der Steuerinformation auf dem Steuerbus für Schreiben und Lesen angezeigt wird, lediglich die auftraggebende Funktionseinheit einen Dialog mit dem Busverwalter führt und Bussender der auftraggebenden Funktionseinheit zum Schreiben auf den Datenbus durch den Busverwalter eingeschaltet werden, jedoch Bussender der auftragnehmenden Funktionseinheit zur Abgabe eines für die auftraggebende Funktionseinheit bestimmten codierten, den Erfolg oder Misserfolg einer Datenübertragung anzeigenden Hinweissignals auf einen Fehlerreaktionsbus oder von ggf. zu lesenden Daten auf den Datenbus von dieser selbst eingeschaltet werden, sobald diese durch ständiges Abfragen des Steuerbusses eine an sie gerichtete diesbezügliche Steuerinformation erkennt.

2. Verfahren nach Anspruch 1, dadurch gekennzeichnet, dass neue Anforderungssignale einer oder mehrerer, unmittelbar vorher noch aktiver Funktionseinheiten zu ihrer Priorität für eine vorgegebene Zeit zurückgestuft werden, so dass Anforderungssignale von Funktionseinheiten mit ursprünglich niedrigerer Priorität bevorzugt werden.

3. Schaltungsanordnung zur Durchführung des Verfahrens nach einem der Ansprüche 1 oder 2, dadurch gekennzeichnet, dass eine Prioritätsdecodierstufe (PD) vorgesehen ist, in der die Busanforderungssignale (BUSR X) der einzelnen Funktionseinheiten (FE 1...5) mit einem Prioritätssignal (PEN) decodiert werden, dass decodierte Ausgangssignale der Prioritätsdecodierstufe (PD) einem durch ein Taktsignal (PENA) getakteten Prioritätsflipflop (PF) zugeführt sind, welches jeweils ein der jeweiligen Funktionseinheit (FE 1...5) bzw. dessen Busanforderungssignal (BUSR 1...5) zugeordnetes Busfreigabesignal (BE 1...5) erzeugt, dass dieses Busfreigabesignal (BE 1...5) einem Treiber (T) zur Erzeugung eines Steuerbus-Freigabesignals (CBE X) und einem ODER-Glied (OR1) zur Erzeugung eines Sammelsignals (SBE) und eines aus dem Sammelsignal (SBE) durch eine ODER-Verknüpfung (OR2) mit einem Busantwort-Anforderungssignal (BUSAA) gebildeten Prioritätsfreigabesignals (PENF) zugeführt wird, dass das Busfreigabesignal (BE 1...5) ferner in je einem UND-Glied (U1, U2) mit einem Schreibsignal (W) bzw. mit dem Busantwort-Anforderungssignal (BUSAA) zur Erzeugung eines Datenbus-Freigabesignals (DBE X) bzw. Busantwortsignals (BUSA X) verknüpft ist, und dass mit dem Sammelsignal (SBE) ein Busverwaltungszähler ansteuerbar ist, der aus einer Multiplexerschaltung (MUX BVZ) und zwei Flipflops (FF-BVZ) besteht und dessen beide Zählerstände (BVZ 0, BVZ 1) mit Meldesignalen, Lese- und Schreibsignalen (R, W) od. dgl. über eine Mehrfach-UND/ODER-Schaltung (MUOR) zur Erzeugung des Busantwort-Anforderungssignals (BUSAA) verknüpft werden.

4. Schaltungsanordnung nach Anspruch 3, dadurch gekennzeichnet, dass zur Prioritätssteuerung der Busanforderungssignale (BUSR 1...5) einzelner Funktionseinheiten (FE 1...5) für ausgewählte Busfreigabesignale (BE 1, 2) je ein Zähler (COUNT-1, -2) vorgesehen ist, deren Ausgänge über je ein UND-Glied (UG1, 2) mit dem jeweils zugeordneten Busanforderungssignal (BUSR 1, 2) zur Ansteuerung der Prioritätsdecodierstufe (PD) verknüpft sind.

## Claims

1. A method of controlling the data transport between individual function units of a data processing system, using a central bus system which is common to all the function units and which comprises a data bus and a control bus, wherein the instruction-giving function unit, which engages in data transport with another instruction-receiving function unit within the data processing system, transmits a request signal to a central bus administrator (BV) which carries out a priority check on the instruction-giving function unit followed by a priority allocation, whereupon an item of control information made available in a transmitting register of the instruction-giving function unit is conducted *via* the control bus and received by the instruction-receiving function unit, characterized in that the transmission direction of the data on the data bus (DBUS) is indicated by an appropriate coding of the control information on the control bus for write and read, only the instruction-giving function unit conducts a dialogue with the bus administrator, and bus transmitters of the instruction-giving function unit are switched on by the bus administrator in order to write on the data bus, whereas bus transmitters of the instruction-receiving function unit are switched on by the function unit itself in order to emit an indication signal which is specifically coded for the instruction-giving function unit and which indicates the success or failure of a data transmission on a fault reaction bus or data which is possibly to be read on the data bus, as soon as said function unit recognises a relevant item of control information directed towards itself, as a result of constant interrogation of the control bus.

2. A method as claimed in Claim 1, characterized in that new request signals from one or more than one function unit which was active immediately beforehand are regressed in their priority by a given length of time, so that request signals from function units having an originally lower priority are given preference.

3. A circuit arrangement for the implementation of the method claimed in one of Claims 1 or 2, characterized in that a priority decoder state (PD) is provided in which the bus request signals (BUSR X) of the individual function units (FE 1...5) are decoded with a priority signal (PEN), that decoded output signals from the priority decoder stage (PD) are fed to a priority flip-flop (PF) which is clock-controlled by a clock signal (PENA) and which produces a bus release signal (BE 1...5) assigned to the function unit (FE 1...5) in question and to its bus request signal (BUSR 1...5), that this bus release signal (BE 1...5) is fed to a driver (T) in order to produce a control bus release signal (CBE X) and to an OR-gate (OR1) in order to produce a collective signal (SBE) and a priority release signal (PENF) formed from the collective signal (SBE) by an OR-link (OR2) with a bus response request signal (BUSAA), that the bus release signal (BE 1...5) is also logic-linked in an AND-gate (U1, U2) respectively to a write signal (W) and to the bus response request signal (BUSAA) in order to produce a data bus release signal (DBE X) and a bus response signal (BUSA X) respectively and that the collective signal (SBE) can be used to drive a bus administration counter which comprises a multiplexer circuit (MUX BVZ) and two flip-flops (FF-BVZ) and whose two counts (BVZ 0, BVZ 1) are logic-linked to message signals, read and write signals (R, W) or the like *via* a multiple-AND/OR circuit (MUOR) in order to produce the bus response request signal (BUSAA).

4. A circuit arrangement as claimed in Claim 3, characterized in that, for the priority control of the bus request signals (BUSR 1...5) of individual function units (FE 1...5) for selected bus release signals (BE 1, 2), there is in each case provided a counter (COUNT 1, 2) whose outputs are logic-linked *via* an AND-gate (UG1, 2) to the assigned bus request signal (BUSR 1, 2) in order to drive the priority decoder stage (PD).

## Revendications

1. Procédé pour commander le transfert de données entre différentes unités fonctionnelles d'une installation de traitement des données, moyennant l'utilisation d'un système central de bus commun à toutes les unités fonctionnelles et constitué par un bus de transmission de données et un bus de commande, et selon lequel l'unité fonctionnelle qui délivre respectivement des ordres et exécute un transfert de données avec une autre unité fonctionnelle de l'installation de traitement de données, recevant des ordres, émet un signal de demande à un dispositif central (BV) de gestion de bus, qui réalise un contrôle de priorité de l'unité fonctionnelle délivrant des ordres et une affectation de priorité effectuée après ce contrôle, à la suite de quoi une information de commande préparée dans un registre d'émission de l'unité fonctionnelle délivrant des ordres est transmise par l'intermédiaire du bus de commande et est reçue dans l'unité fonctionnelle recevant respectivement les ordres, caractérisé par le fait que le sens de transmission des données dans le bus de transmission de données (DBUS) est indiqué par un codage correspondant de l'information de codage dans le bus de commande pour l'enregistrement et la lecture, que seule l'unité fonctionnelle délivrant des ordres exécute un dialogue avec le dispositif de gestion de bus et que des émetteurs de bus de l'unité fonctionnelle délivrant des ordres sont branchés, pour l'enregistrement dans le bus de transmission de données, au moyen du dispositif de gestion de bus, mais que des émetteurs de bus de l'unité fonctionnelle recevant des ordres sont branchés par cette unité elle-même, en vue de la délivrance d'un signal d'indication codé, destiné à l'unité fonctionnelle délivrant des ordres et indiquant le succès ou l'échec d'une transmission de données, dans un bus de réaction en cas d'erreur, ou pour la délivrance de données, devant être éventuellement lues, dans le bus de transmission de données, dès que ladite unité fonctionnelle identifie, au moyen d'une interrogation permanente du bus de commande, une information de commande qui la concerne et lui est envoyée.

2. Procédé selon la revendication 1, caractérisé en ce que de nouveaux signaux de demande d'une ou de plusieurs unités fonctionnelles encore actives à un instant immédiatement précédent sont rétrogradés, du point de vue de leur priorité pendant un intervalle de temps prédéterminé, de sorte que des signaux de demande d'unités fonctionnelles possédant une priorité moins élevée à l'origine sont préférés.

3. Montage pour la mise en œuvre du procédé suivant l'une des revendications 1 ou 2, caractérisé par le fait qu'il est prévu un étage de décodage de priorité (PD), dans lequel les signaux de demande de bus (BUSR X) des différentes unités fonctionnelles (FE 1...5) sont décodés avec un signal de priorité (PEN), que les signaux de sortie décodés de l'étage de décodage de priorité (PD) sont envoyés à une bascule bistable de priorité (PS) commandée de façon cadencée par un signal de cadence (PENA) et qui produit respectivement un signal de libération de bus (BE 1...5) associé à l'unité fonctionnelle considérée (FE 1...5) ou au signal de demande de bus (BUSR 1...5) de cette unité, que ce signal de libération de bus (BE 1...5) est envoyé à un étage (T) en vue de la production d'un signal de libération de bus de commande (CBE X) et à un circuit OU (OR1) en vue de la production d'un signal de libération de priorité (PENF) formé à partir du signal somme (SBE) par une combinaison logique OU (OR2) avec un signal de demande de réponse de bus (BUSAA), que le signal de libération de bus (BE 1...5) est en outre combiné, par des circuits ET respectifs (U1, U2), à un signal d'enregistrement (W) ou au signal de demande de réponse de bus (BUSAA) pour la production d'un signal de libération de bus de transmission de données (DBE X) ou d'un signal de réponse de bus (BUSA X), et que le signal somme (SBE) peut commander un compteur de gestion de bus, qui est constitué par un circuit multiplexeur (MUX BVZ) et par deux bascules bistables (FF-BVZ) et dont les deux états de comptage (BVZ 0, BVZ 1) sont combinés à des signaux de signalisation, des signaux de lecture et des signaux d'enregistrement (R, W) ou analogues par l'intermédiaire d'un circuit ET/OU à un multiple (MUOR) pour la production du signal de demande de réponse de bus (BUSAA).

4. Montage suivant la revendication 3, caractérisé par le fait que, pour la commande de priorité des signaux de demande de bus (BUSR 1...5) de différentes unités fonctionnelles (FE 1...5), il est prévu, pour des signaux sélectionnés de libération de bus (BE 1, 2), des compteurs respectifs (COUNT 1, 2) dont les sorties sont combinées logiquement, par l'intermédiaire de circuits ET (UG1, 2), au signal respectivement associé de demande de bus (BUSR 1, 2) pour la commande de l'étage de décodage de priorité (PD).

FIG 1

0 059 237

FIG 2

X = 1,2,3,4,5

FIG 3